# EUROPÄISCHE PATENTSCHRIFT

(11) **EP 2 701 286 B1**
(45) Veröffentlichungstag und Bekanntmachung des Hinweises auf die Patenterteilung: **04.03.2020**
(21) Anmeldenummer: 13175883.1
(22) Anmeldetag: 10.07.2013
(51) Int. Cl.: H02K 5/20

(54) **Gehäuse für eine elektrische Maschine mit mäanderförmigem Kühlkanal und Leitgeometrien**
Housing for an electric machine with meandering cooling channel and guide structures
Boîtier pour une machine électrique dotée d'un canal de refroidissement en forme de méandre et de géométries conductrices

(30) Priorität: 23.08.2012 DE 102012215018
(43) Veröffentlichungstag der Anmeldung: 26.02.2014
(73) Patentinhaber: Robert Bosch GmbH, 70442 Stuttgart (DE)
(72) Erfinder: Knappenberger, Uwe, 75417 Muehlacker (DE); Kuehbacher, Daniel, 70569 Stuttgart (DE)

(56) Entgegenhaltungen:
- WO-A2-2012/066072
- DE-A1-102008 040 873
- DE-A1-102009 001 387
- DE-U1-202004 018 968

## Beschreibung

### Stand der Technik

Elektromaschinen können beispielsweise durch Flüssigkeiten gekühlt werden. Hierzu kann am Gehäuse der Elektromaschine ein Kühlkanal vorgesehen sein, in dem ein Kühlfluid beispielsweise in Umfangrichtung um die Elektromaschine strömt.

Um eine Wärmeübertragung von der Elektromaschine auf das Kühlfluid zu erhöhen, kann einerseits eine Kühlfläche vergrößert werden. Andererseits kann hierzu die Strömungsgeschwindigkeit des Kühlfluids vergrößert werden. Um eine Erhöhung der Strömungsgeschwindigkeit zu erreichen, kann das Kühlfluid zum Beispiel helixförmig um das Gehäuse geleitet werden. Ferner können am Gehäuse Elemente wie Kühlrippen, Kühlnadeln oder ähnliches eingebracht sein. Beispielsweise sind derartige Gehäuse aus DE 10141890 A1 bekannt.

Ferner kann eine Erhöhung der Strömungsgeschwindigkeit des Kühlfluids dadurch erreicht werden, dass das Kühlfluid abwechselnd in axialer Richtung umgelenkt wird. Dabei können allerdings sogenannte Totwassergebiete entstehen, in denen sich beispielsweise Luftblasen ansammeln können und die die Kühlungseffizienz verringern können.

Ein Gehäuse einer fluidgekühlten Elektromaschine gemäß dem Oberbegriff des Anspruchs 1 ist aus DE 10 2008 040873 A1 bekannt.

### Offenbarung der Erfindung

Es kann daher ein Bedarf an einem verbesserten Gehäuse für eine fluidgekühlte Elektromaschine bestehen, welches insbesondere eine bessere Kühlungseffizienz und eine günstige Herstellung gewährleistet.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteiler einer Vorrichtung gemäß Ausführungsformen der Erfindung im Detail diskutiert. Gemäß einem ersten Aspekt der Erfindung wird ein Gehäuse für eine fluidgekühlte Elektromaschine vorgestellt. Das Gehäuse weist eine äußere Mäanderfläche und eine innere Mäanderfläche auf, die einen geschlossenen Kühlkanal bilden. Ferner weist das Gehäuse mindestens einen ersten Mäandersteg und einen zweiten Mäandersteg auf, die beide derart am Gehäuse bzw. am Kühlkanal angeordnet sind, dass ein Kühlfluid mäanderförmig geführt wird. Des Weiteren weist das Gehäuse mindestens einen Leitsteg auf, der zwischen dem ersten und dem zweiten Mäandersteg angeordnet ist, dessen Längsachse parallel zur Längsachse des Gehäuses verläuft, und dass der zumindest eine Leitsteg ausgeführt ist, das Kühlfluid in parallele Strömungen aufzuteilen, die parallel zur Längsachse des Gehäuses zwischen dem ersten und dem zweiten Mäandersteg geführt sind und in die gleiche Richtung strömen.

Anders ausgedrückt basiert die Idee der vorliegenden Erfindung darauf, zwischen den Mäanderstegen zusätzliche Leitstege vorzusehen, die zu einer Aufspaltung der Strömung des Kühlfluids jeweils zwischen zwei benachbarten Mäanderstegen führt. Durch die Auftrennung der Strömung des Kühlfluids zwischen den Mäanderstegen wird eine Reduzierung von Totwassergebieten erreicht. Auf diese Weise kann die Kühlfläche des Gehäuses vergrößert werden und damit die Kühlungseffizienz des Gehäuses bei gleicher hydraulischer Pumpleistung um bis zu ca. 30 Prozent erhöht werden. Ferner kann dank der verbesserten Führung des Kühlfluids durch die Leitstege eine bessere Entlüftung des Kühlkanals gewährleistet werden. Die bessere Entlüftung wird dadurch bewirkt, dass die Totwassergebiete, also die Gebiete, die nicht durch das Kühlfluid erreicht werden, verringert werden und sich damit weniger Luft bzw. Luftbläschen in diesen Totwassergebieten ansammeln können. Des Weiteren sind die Leitstege derart im Kühlkanal angeordnet, dass sie den Strömungswiderstand nicht oder nur geringfügig erhöhen. Somit wird mit Hilfe der Leitstege bei gleichbleibender Pumpleistung einer Kühlfluidpumpe eine bessere Kühlung erreicht.

Zusätzlich gewährleisten die Leitstege eine bessere mechanische Steifigkeit des Gehäuses und gegebenenfalls eine bessere mechanische Steifigkeit der Gussform bei der Herstellung des Gehäuses.

Das Gehäuse kann zum Beispiel für fluidgekühlte Elektromaschinen wie Generatoren oder Motoren mit einem Stator und einem Rotor verwendet werden. Beispielsweise kann das Gehäuse für Elektromaschinen in Kraftfahrzeugen, insbesondere in Hybridfahrzeugen verwendet werden. Dabei weist das Gehäuse ein Material mit guter Wärmeleitfähigkeit auf. Beispielsweise kann das Gehäuse ein Metall wie zum Beispiel Aluminium aufweisen. Ferner kann das Kühlfluid, auch als Kühlmittel bezeichnet, eine Flüssigkeit oder ein Gas sein. Beispielsweise kann das Kühlfluid Wasser sein.

Das Gehäuse kann zylinderförmig ausgeführt sein und zur Aufnahme eines Stators und eines Rotors geeignet sein. Hierzu weist das Gehäuse eine äußere Mantelfläche und eine innere Mantelfläche auf, die zusammen einen geschlossenen Kühlkanal bilden und vorzugsweise einstückig, das heißt integral oder stoffschlüssig ausgeführt sind. Dabei können die Leitstege und ggf. auch die Mäanderstege sowohl mit der inneren Mantelfläche als auch mit der äußeren Mantelfläche verbunden sein. Ferner kann der Kühlkanal zwei- bzw. mehrteilig in axialer Richtung ausgeführt sein.

Alternativ können die innere Mantelfläche und die äußere Mantelfläche separat, d.h. zweistückig in radialer Richtung, gefertigt sein. In diesem Fall können die Leitstege und ggf. auch die Mäanderstege auf der inneren Mantelfläche stoffschlüssig angebunden sein.

Die äußere und die innere Mantelfläche des Kühlkanals können zylinderförmig mit unterschiedlichen Durchmessern ausgeführt sein. Der Kühlkanal kann dabei auch als Kühlmantel bezeichnet werden.

Das Gehäuse weist ferner mindestens einen ersten Mäandersteg und mindestens einen zweiten Mäandersteg auf. Insbesondere kann das Gehäuse eine Vielzahl von ersten und eine Vielzahl von zweiten Mäanderstegen aufweisen. Ein Mäandersteg kann dabei ein längliches Element mit einer Längsachse sein, das direkt mit dem Rand des Kühlkanals in Verbindung steht. Dabei ist der erste Mäandersteg mit dem Rand einer ersten Seite des Gehäuses und der zweite Mäandersteg mit dem Rand auf der anderen Seite des Gehäuses direkt verbunden. Die Mäanderstege können sich dabei in Umlaufrichtung abwechseln. Die Mäanderstege können einstückig bzw. integral oder stoffschlüssig mit den Mantelflächen ausgeführt sein.

Die Mäanderstege können abwechselnd an einem ersten und einem zweiten Rand des Kühlkanals angeordnet sein und in den Kühlkanal hineinragen. Ist eine Längsachse des Gehäuses beispielsweise senkrecht zu einer Horizontalen angeordnet, so kann ein erster Rand des Kühlkanals oben und ein zweiter Rand des Kühlkanals unten angeordnet sein. Eine Vielzahl von ersten Mäanderstegen kann beispielsweise am ersten Rand des Kühlkanals beginnen und parallel zur Längsachse des Gehäuses nach unten verlaufen. Dabei sind die ersten Mäanderstege in einem Abstand vom zweiten Rand angeordnet. Die zweiten Mäanderstege können am zweiten Rand, also am unten befindlichen Rand des Kühlkanals beginnen und parallel zur Längsachse des Gehäuses nach oben verlaufen.

Insgesamt sind die ersten und zweiten Mäanderstege derart am Kühlkanal angeordnet, dass das Kühlfluid, mäanderförmig im Kühlkanal geführt wird. Insbesondere kann das Kühlfluid durch die Mäanderstege abwechselnd zumindest abschnittsweise im Wesentlichen parallel und antiparallel zur Längsachse des Gehäuses geführt werden. Antiparallel bedeutet dabei, dass die Strömungsrichtung des Kühlfluids im Wesentlichen parallel zur Längsachse, jedoch in entgegengesetzter Richtung als zuvor verläuft. Das heißt, das Kühlfluid kann abwechselnd in axialer Richtung des Gehäuses umgelenkt werden.

Erfindungsgemäß ist zwischen dem mindestens einen ersten und dem mindestens einen zweiten Mäandersteg ist-mindestens ein Leitsteg vorgesehen. Der Leitsteg, auch als Zwischensteg bezeichnet, kann dabei derart am Gehäuse angeordnet sein, dass eine Kühlfläche des Gehäuses vergrößert wird. Die Kühlfläche wird dabei dadurch vergrößert, dass die Führung des Kühlfluids durch den Leitsteg eine Verringerung von Totwassergebieten bewirkt. Das heißt, mit dem Leitsteg wird mehr Fläche durch das Kühlfluid erreicht als ohne einen Leitsteg. Der Leitsteg kann dabei ein längliches Bauelement mit einer Längsachse sein. Dabei ist der Leitsteg mit keinem der Ränder des Kühlkanals verbunden.

Insbesondere kann zwischen jedem ersten und zweiten Mäandersteg jeweils ein Leitsteg vorgesehen sein. Das Kühlfluid strömt im Wesentlichen in Umfangsrichtung und wird durch die Mäanderstege mäanderförmig abwechselnd in axialer Richtung umgelenkt. Ferner kann das Kühlfluid die Leitstege an allen Seiten umströmen und wird dadurch zwischen zwei benachbarten Mäanderstegen in zwei separate Strömungen aufgeteilt, die z.B. besser Ecken des Kühlkanals erreichen können.

Erfindungsgemäß ist der Leitsteg ausgeführt, das Kühlfluid in zwei parallele Strömungen bzw. Ströme einzuteilen. Dabei werden beide Strömungen parallel oder antiparallel zur Längsachse des Gehäuses zwischen dem ersten und dem zweiten Mäandersteg geführt. Anders ausgedrückt bewirkt der Leitsteg eine Aufspaltung des Stromes des Kühlfluids zwischen zwei benachbarten Mäanderstegen, so dass das Kühlfluid an beiden Seiten des Leitstegs im Wesentlichen zumindest abschnittsweise in die gleiche Richtung strömt und anschließend wieder zusammengeführt wird.

Gemäß einem Ausführungsbeispiel der Erfindung ist der Leitsteg stoffschlüssig mit der äußeren und mit der inneren Mantelfläche verbunden. Das heißt, der Leitsteg ist einstückig bzw. integral mit dem Gehäuse bzw. mit den Mantelflächen des Gehäuses ausgeführt. Hierzu kann das Gehäuse beispielsweise mittels des Lost-Foam-Verfahrens, welches zum Beispiel aus DE 102008040873 A1 bekannt ist, hergestellt werden. Dabei bilden sowohl der Leitsteg als auch die Mantelflächen und gegebenenfalls auch die Mäanderstege eine Einheit. Alternativ kann der Leitsteg durch Schweißen oder Löten mit der inneren und mit der äußeren Mantelfläche verbunden werden. Auch der erste und der zweite Mäandersteg bzw. die Vielzahl der ersten und zweiten Mäanderstege können stoffschlüssig mit der äußeren und der inneren Mantelfläche ausgeführt sein.

Alternativ, kann der Leitsteg bei mehrteiliger Ausführung des Gehäuses, stoffschlüssig mit einer der Mantelflächen ausgeführt sein und bündig an der anderen Mantelfläche anliegen. Ferner kann bei einer zwei- oder mehrteiligen Ausgestaltung des Kühlkanals ein Spalt zwischen dem Leitsteg und einer der Mantelflächen vorgesehen sein.

Erfindungsgemäß verläuft eine Längsachse des Leitstegs im Wesentlichen parallel zur Längsachse des Gehäuses. Das heißt, die Leitstege bzw. die Längsachsen der Leitstege können axial, das heißt parallel zur Längsachse des Gehäuses orientiert sein. Alternativ oder zusätzlich ist eine Längsachse des ersten Mäanderstegs und eine Längsachse des zweiten Mäanderstegs parallel zur Längsachse des Gehäuses orientiert. Beispielsweise können sowohl die Längsachsen aller Leitstege als auch die Längsachsen aller Mäanderstege parallel zur Längsachse des Gehäuses verlaufen. Hierdurch wird ein unkomplizierter Aufbau des Gehäuses bereitgestellt.

Dabei kann der Leitsteg bzw. alle Leitstege mittig jeweils zwischen benachbarten ersten und zweiten Mäanderstegen angeordnet sein. Hierdurch kann eine besonders vorteilhafte Aufteilung des Kühlfluids zwischen dem ersten und dem zweiten Mäandersteg bewirkt werden, so dass möglichst viel Fläche des Gehäuses durch das Kühlfluid erreicht wird.

Gemäß einem Ausführungsbeispiel, das nicht Gegenstand der Erfindung ist, schließt die Längsachse des Leitstegs einen Winkel mit der Längsachse des Gehäuses ein. Das heißt, die Längsachse des Leitstegs kann gegenüber einer axialen Richtung des Gehäuses mit einem Winkel angestellt sein. Unterschiedliche Leitstege am Gehäuse können dabei unterschiedliche Neigungswinkel aufweisen. Beispielsweise kann die Längsachse eines Leitstegs gegenüber der Längsachse des Gehäuses um ca. 30° geneigt sein. Eine Längsachse eines weiteren Leitstegs kann dabei um -30° gegenüber einer Längsachse des Gehäuses geneigt sein. Das heißt, dass zwei Leitstege zum Beispiel spiegelsymmetrisch zu einem ersten Mäandersteg und/oder einem zweiten Mäandersteg angeordnet sind. Insbesondere kann er Neigungswinkel der Leitstege zwischen 0° und 30° bzw. zwischen 0° und -30° liegen. Eine symmetrische Anordnung der Leitstege kann vorteilhaft sein, da diese eine Richtungsunabhängigkeit der Durchströmung des Kühlkanals gewährleistet. Alternativ können die Leitstege asymmetrisch angeordnet sein. Dabei können die Leitstege asymmetrisch bezüglich der Mäanderstege angeordnet sein. D.h. die Leitstege können z.B. nicht mittig zwischen dem rechten und dem linken Mäandersteg angeordnet sein. Nicht-erfindungsgemäß können die Leitstege asymmetrisch bezüglich einer axialen Richtung angeordnet sein.

Ferner können die einzelnen Mäanderschleifen, d.h. eine Folge aus Leitsteg und Mäandersteg unterschiedlich bzw. asymmetrisch ausgeführt sein. Dies kann das Herstellungsverfahren vereinfachen, wenn z.B. Fertigungsbedingt bestimmte Stege an einer Stelle am Umfang möglich sind, an einer anderen aber nicht, z.B. wegen der Entformrichtung.

Gemäß einem weiteren Ausführungsbeispiel der Erfindung variiert ein zur Längsachse des Leitstegs senkrechter Querschnitt des Leitstegs entlang der Längsachse des Gehäuses. Das heißt, der Querschnitt des Leitstegs kann sich in axialer Richtung des Gehäuses ändern. Beispielsweise kann ein Leitsteg sich zu einer Richtung der Längsachse des Gehäuses verjüngen und zur anderen Richtung hin breiter werden. Insbesondere kann ein Leitsteg stabförmig, rautenförmig oder dreieckig ausgeführt sein.

Gemäß einem weiteren Ausführungsbeispiel der Erfindung ist zwischen dem ersten und dem zweiten Mäandersteg mindestens ein weiterer Leitsteg vorgesehen. Das heißt, zwischen zwei benachbarten Mäanderstegen sind mindestens zwei Leitstege angeordnet. Dabei kann ein Abstand zwischen den Leitstegen jeweils dem Abstand eines Leitstegs zum nächsten Mäandersteg entsprechen. Die Leitstege zwischen dem ersten und dem zweiten Mäandersteg sind dabei erfindungsgemäß parallel zueinander angeordnet. Ferner können diese Leitstege unterschiedliche Längen und Formen aufweisen. Ferner können die Leitstege in unterschiedlichem Abstand zum ersten und zum zweiten Rand des Kühlkanals angeordnet sein.

Gemäß einem weiteren Ausführungsbeispiel der Erfindung sind mindestens zwei Leitstege durch Umlenkstege miteinander verbunden. Die Umlenkstege können dabei als Umlenkhilfen dienen. Die Umlenkstege können dabei z.B. linienförmig und geradlinig verlaufen. Dabei können die Umlenkstege z.B. senkrecht zur axialen Richtung des Kühlkanals verlaufen. Alternativ können die Umlenkstege abgerundet bzw. bogenförmig ausgeführt sein.

Gemäß einem weiteren Ausführungsbeispiel der Erfindung sind in den Leitstegen und/oder in den Mäanderstegen Unterbrechungen vorgesehen. Die Unterbrechungen können z.B. Öffnungen sein, an denen die innere und die äußere Mantelfläche nicht verbunden sind. Hierdurch kann die Kühloberfläche vergrößert werden. Ferner ermöglichen die Unterbrechungen einen Austausch zwischen den einzelnen durch das Kühlfluid durchströmten Kanälen. Die Unterbrechungen können insbesondere vorteilhaft sein, wenn die Leitstege mittels Umlenkstegen verbunden sind, so dass im Kühlkanal ausgeprägte parallele Pfade der Kühlflüssigkeit entstehen. Die Unterbrechungen können dabei einen Druckausgleich zwischen den Pfaden herstellen.

Gemäß einem zweiten Aspekt der Erfindung wird eine fluidgekühlte Elektromaschine vorgestellt. Die fluidgekühlte Elektromaschine weist dabei einen Stator, einen Rotor und ein oben beschriebenes Gehäuse auf. Der Stator und der Rotor sind dabei im Gehäuse angeordnet. Das Gehäuse ist dabei ausgeführt, den Stator und/oder den Rotor mittels eines Kühlfluids zu kühlen.

Weiterhin wird ein nichterfindungsgemäßes Verfahren zur Herstellung eines oben beschriebenen Gehäuses vorgestellt. Das Verfahren weist die folgenden Schritte auf: Bereitstellen einer äußeren und einer inneren Mantelfläche, die zusammen einen geschlossenen Kühlkanal bilden. Vorsehen mindestens eines ersten und eines zweiten Mäanderstegs derart am Gehäuse, dass ein Kühlfluid abwechselnd parallel und antiparallel zu einer Längsachse des Gehäuses geführt wird. Vorsehen eines Leitstegs zwischen dem ersten und dem zweiten Mäandersteg derart, dass der Leitsteg die äußere und die innere Mantelfläche verbindet und eine Kühlfläche des Gehäuses vergrößert. Dabei kann zur integralen Herstellung des Gehäuses ein Lost-Foam-Verfahren, ein Schweißverfahren oder ein Lötverfahren eingesetzt werden.

Gemäß einem weiteren Ausführungsbeispiel der Erfindung ist der Kühlkanal einstückig ausgeführt. Anders ausgedrückt sind die äußere Mantelfläche und die innere Mantelfläche durch die Leitstege und gegebenenfalls auch durch die Mäanderstege stoffschlüssig radial verbunden. D.h. die Leitstege sind sowohl mit der inneren als auch mit der äußeren Mantelfläche stoffschlüssig verbunden. Beispielsweise kann der Kühlkanal dabei mit Hilfe eines Sandgussverfahrens, insbesondere eines Lost Foam Verfahrens hergestellt werden.
Gemäß einem weiteren Ausführungsbeispiel der Erfindung ist der Kühlkanal in axialer Richtung und in radialer Richtung zweiteilig ausgeführt. Bei einer zwei- bzw. mehrteiligen Ausführung in axialer Richtung können die äußere Mantelfläche und die innere Mantelfläche wie oben beschrieben stoffschlüssig durch die Leitstege verbunden sein.
Bei einer in radialer Richtung zwei- bzw. mehrteiligen Ausführung des Kühlkanals können die Leitstege und die Mäanderstege mit einer der Mantelflächen stoffschlüssig verbunden sein. Beispielsweise können die Leitstege und die Mäanderstege einstückig mit der inneren Mantelfläche gefertigt werden. Dabei kann im Kühlkanal ein Spalt zwischen der äußeren Mantelfläche und den Leitstegen vorliegen. Bei diesem Ausführungsbeispiel können die einzelnen Teile des Kühlkanals z.B. gefräst, gegossen und geschweißt werden. Insbesondere kann die innere Mantelfläche zusammen mit den Leitstegen und den Mäanderstegen durch ein Druckgussverfahren und durch radiale Entformung hergestellt werden.
Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt Strömungsgeschwindigkeiten eines Kühlfluids in einem bekannten Einfachfmäander in einer Projektion in die Ebene
- Fig. 2: zeigt Strömungsgeschwindigkeiten eines Kühlfluids in einem Kühlkanal eines Gehäuses gemäß einem Ausführungsbeispiel der Erfindung
- Fig. 3: zeigt eine plastische Darstellung eines Kühlkanals eines Gehäuses gemäß einem Ausführungsbeispiel der Erfindung
- Fig. 4: zeigt schematisch einen Strömungsverlauf in einem Kühlkanal eines Gehäuses gemäß einem Ausführungsbeispiel der Erfindung
- Fig. 5: zeigt einen Kühlkanal eines Gehäuses mit geneigten Leitstegen gemäß einem nicht-erfindungsgemäßen Ausführungsbeispiel, das nicht Gegenstand der Erfindung ist.
- Fig. 6: zeigt einen Kühlkanal eines Gehäuses mit Leitstegen mit variablem Durchmesser gemäß einem nicht-erfindungsgemäßen Ausführungsbeispiel, das nicht Gegenstand der Erfindung ist.

- Fig. 7: zeigt einen Kühlkanal eines Gehäuses mit Leitstegen mit variablem Durchmesser gemäß einem nicht-erfindungsgemäßen Ausführungsbeispiel, das nicht Gegenstand der Erfindung ist.

- Fig. 8: zeigt einen Kühlkanal eines Gehäuses mit jeweils zwei Leitstegen zwischen benachbarten Mäanderstegen gemäß einem weiteren Ausführungsbeispiel der Erfindung
- Fig. 9: zeigt einen Querschnitt durch eine Elektromaschine gemäß einem Ausführungsbeispiel der Erfindung
- Fig. 10: zeigt einen Kühlkanal mit einem asymmetrisch ausgestalteten Leitsteg gemäß einem weiteren Ausführungsbeispiel der Erfindung
- Fig. 11: zeigt einen Kühlkanal mit Umlenkstegen, die Leitstege verbinden gemäß einem weiteren Ausführungsbeispiel der Erfindung
- Fig. 12: zeigt einen Kühlkanal mit bogenförmigen Umlenkstegen gemäß einem weiteren Ausführungsbeispiel der Erfindung
- Fig. 13: zeigt einen Kühlkanal mit Unterbrechungen an Leitstegen und an Mäanderstegen gemäß einem weiteren Ausführungsbeispiel der Erfindung
- Fig. 14: zeigt einen Kühlkanal mit Umlenkstegen und Unterbrechungen gemäß einem weiteren Ausführungsbeispiel der Erfindung
- Fig. 15: zeigt einen Querschnitt durch eine innere Mantelfläche bei mehrteiliger Ausführung des Kühlkanals gemäß einem Ausführungsbeispiel der Erfindung

Alle Figuren sind lediglich schematische Darstellungen erfindungsgemäßer oder nicht-erfindungsgemäßer Vorrichtungen bzw. ihrer Bestandteile gemäß Ausführungsbeispielen Insbesondere Abstände und Größenrelationen sind in den Figuren nicht maßstabsgetreu wiedergegeben. In den verschiedenen Figuren sind sich entsprechende Elemente mit den gleichen Referenznummern versehen.
In den Figuren sind teilweise lediglich Teile eines Kühlkanals 9 dargestellt. Der gesamte Kühlkanal 9 kann dabei mehrere, insbesondere eine Vielzahl von Mäanderwindungen aufweisen.

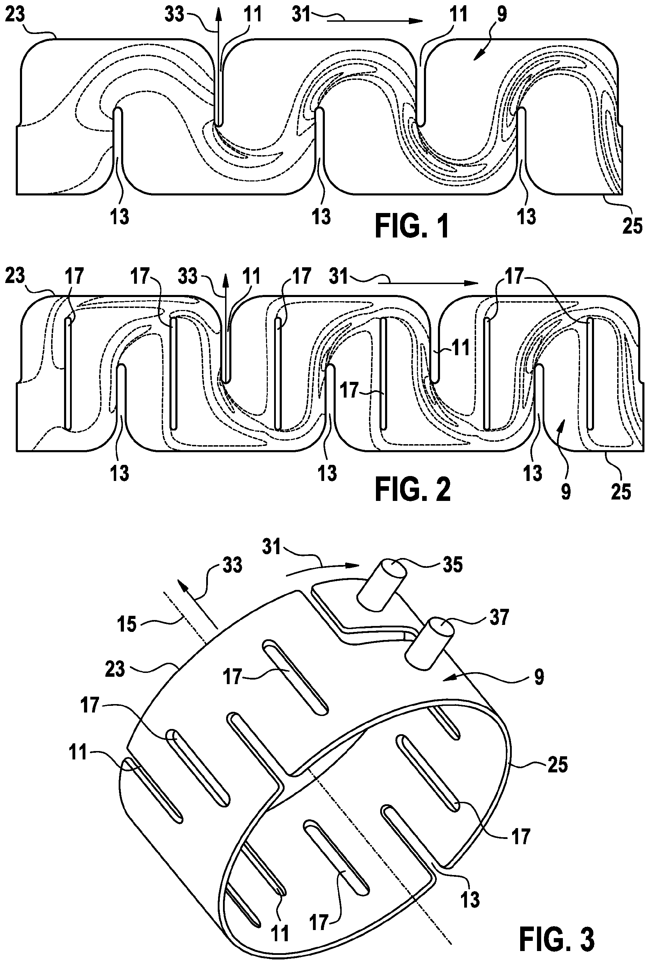

In Fig. 1 ist der Verlauf von Strömungsgeschwindigkeiten im Kühlkanal 9 eines bekannten Gehäuses dargestellt. Dabei ist der Kühlkanal als Einfachmäander ausgeführt. Das heißt, es wechseln sich erste Mäanderstege 11 mit zweiten Mäanderstegen 13 ab. Die ersten Mäanderstege 11 sind dabei beispielsweise an einem ersten Rand 23 des Kühlkanals angeordnet, und die zweiten Mäanderstege 13 sind an einem zweiten Rand 25 des Kühlkanals angeordnet. Ein Kühlfluid strömt dabei im Wesentlichen in Umfangsrichtung 31 um eine in Fig. 1 nicht gezeigte Elektromaschine. Das Kühlfluid wird mehrfach in axialer Richtung 33 umgelenkt. Dabei können Totwassergebiete entstehen, die durch das Kühlfluid nicht erreicht werden und damit eine Kühlungseffizienz verringern. Ferner können sich in den Totwassergebieten Luftblasen ansammeln, die zu Entlüftungsproblemen führen können.

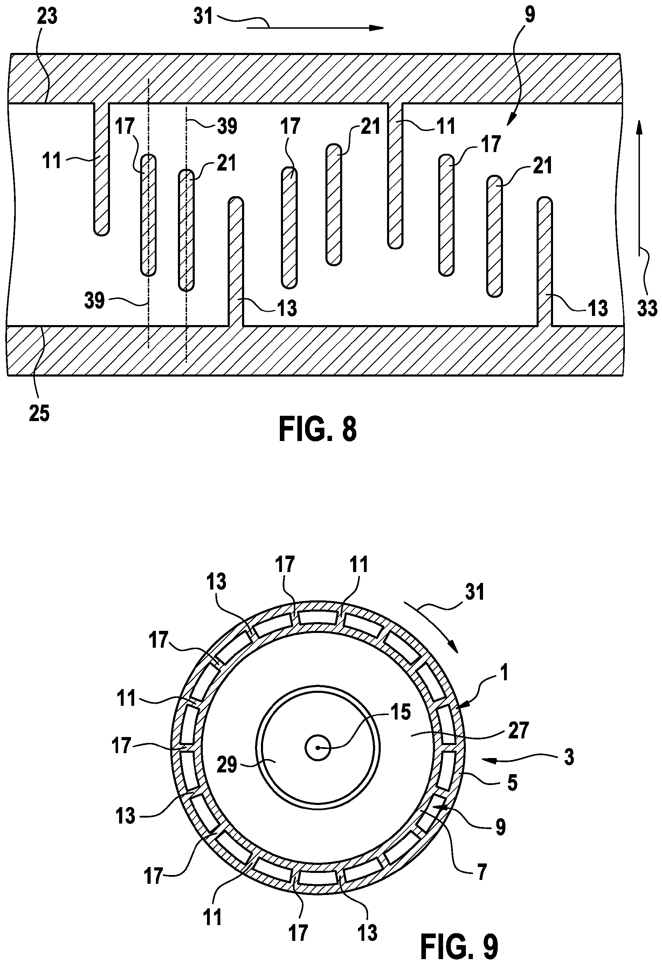

In Fig. 2 ist ein Ausführungsbeispiel der Erfindung dargestellt, bei dem im Kühlkanal 9 eines Gehäuses 1 Leitstege 17 zwischen den Mäanderstegen 11, 13 eingebracht sind. Fig. 2 zeigt dabei einen Verlauf von Strömungsgeschwindigkeiten des Kühlfluids im Kühlkanal 9 in der Projektion in eine Ebene. Durch das Einbringen der Leitstege 17 kann die Kühleffizienz bei gleicher hydraulischer Pumpleistung beispielsweise um ca. 30 % erhöht werden. Die Erhöhung der Kühleffizienz wird durch eine Vergrößerung der Kühlfläche und die Führung der Strömung des Kühlfluids zur Reduzierung von Totwassergebieten bedingt. Zusätzlich wird dank der Anordnung von Leitstegen 17 im Kühlkanal 9 die Entlüftung des Kühlkanals 9 verbessert, da sich nun weniger Luft bzw. Luftbläschen in den Totwassergebieten ansammeln kann. Des Weiteren fördern die im Kühlkanal 9 vorgesehen Leitstege 17 die Steifigkeit des Gehäuses 1, welches zum Beispiel in Fig. 9 gezeigt ist.

Das dem Kühlkanal aus Fig. 2 entsprechende Gehäuse 1 ist beispielsweise in Fig. 9 dargestellt. Fig. 9 zeigt dabei einen Querschnitt einer Elektromaschine 3 mit einem Stator 27 und einem Rotor 29, die von einem Gehäuse 1 umgeben sind. Das Gehäuse weist dabei eine äußere Mantelfläche 5 und eine innere Mantelfläche 7 auf, die zusammen einen geschlossenen Kühlkanal 9 bilden. Am Gehäuse bzw. am Kühlkanal 9 ist eine Vielzahl erster Mäanderstege 11 und eine Vielzahl zweiter Mäanderstege 13 vorgesehen. Im Ausführungsbeispiel in Fig. 9 verbinden die Mäanderstege 11, 13 die innere Mantelfläche 5 mit der äußeren Mantelfläche 7 des Gehäuses 1. Eine Längsachse 15 des Gehäuses 1 ist senkrecht zur Bildebene orientiert. Die ersten und zweiten Mäanderstege 11, 13 verlaufen, wie in Fig. 2 gezeigt, parallel zur Längsachse 15 bzw. parallel zur axialen Richtung 33. Wie in Fig. 2 gezeigt, sind die Mäanderstege 11, 13 derart am Gehäuse 1 angeordnet, dass das Kühlfluid abwechselnd parallel und antiparallel zur Längsachse 15 des Gehäuses 1 geführt wird. Ferner ist jeweils zwischen einem ersten Mäandersteg 11 und einem zweiten Mäandersteg 13 jeweils ein Leitsteg 17 vorgesehen. Die Leitstege 17 verbinden dabei die äußere Mantelfläche 5 mit der inneren Mantelfläche 7.

Die Breite des Kühlkanals 9 kann im Ausführungsbeispiel in Fig. 9 beispielsweise zwischen 3 und 6 mm betragen. Entsprechend kann die Breite der ersten Mäanderstege 11, zweiten Mäanderstege 13 und der Leitstege 17 zwischen 3 und 6 mm betragen. Die axial projizierte Länge der Leitstege 17 ist geringer als die axiale Abmessung des Kühlkanals 9. D.h. die Leitstege 17 sind weder mit dem ersten Rand 23 noch mit dem zweiten Rand 25 des Kühlkanals 9 verbunden. Auf diese Weise kann das Kühlfluid auf beiden Seiten des Leitstegs 17 vorbeiströmen.

Die Leitstege 17 können in einem Gussverfahren, beispielsweise im Lost-Foam-Verfahren hergestellt werden und auf diese Weise stoffschlüssig mit dem Gehäuse verbunden sein. Im Lost-Foam-Verfahren kann ein mäanderförmiger Kühlkanal 9 mit drei Formscheiben, auch als Slice bezeichnet, hergestellt werden. Die Einbringung von Leitstegen 17 in den Kühlkanal 9 bzw. in das Gehäuse 1 erfordert keine zusätzlichen Slices. Auf diese Weise können die Herstellungskosten des Gehäuses 1 gering gehalten werden.

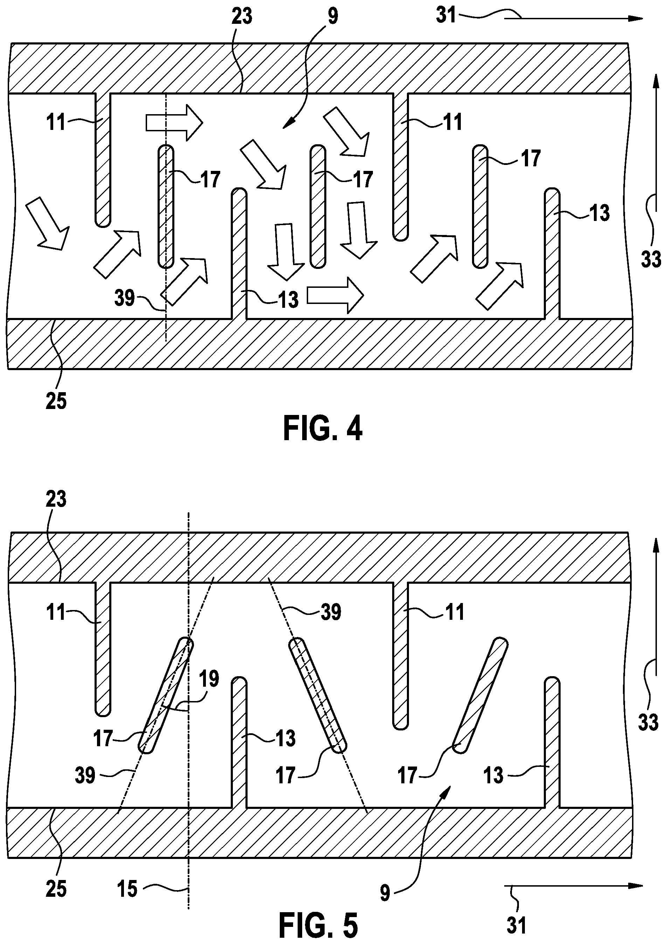

Im Ausführungsbeispiel in Fig. 2 sind die Leitstege 17 bzw. eine Längsachse 39 der Leitstege 17 parallel zu den ersten Mäanderstegen 11, zu den zweiten Mäanderstegen 13 und zur axialen Richtung 33 bzw. zur Längsachse 15 des Gehäuses 1 orientiert. Alternativ können die Leitstege 17 bzw. die Längsachse 39 der Leitstege 17 gegenüber der axialen Richtung 33 in einem Winkel 19 angestellt sein. Dabei schließen die Leitstege 17 einen Winkel 19 mit der Projektion der Längsachse 15 auf den Kühlkanal 9 ein. Insbesondere können die Leitstege 17 unterschiedliche Winkel mit der Längsachse 15 einschließen.
Im nicht-erfindungsgemäßen Ausführungsbeispiel in Fig. 5 sind benachbarte Leitstege 17 jeweils spiegelsymmetrisch zum dazwischen angeordneten Mäandersteg 11 oder dem zweiten Mäandersteg 13 angeordnet. Beispielsweise kann ein Leitsteg 17 einen Winkel von ca. 30° mit der Längsachse 15 des Gehäuses 1 einschließen. Ein benachbarter Leitsteg 17 kann einen Winkel von -30° mit der Längsachse 15 einschließen.

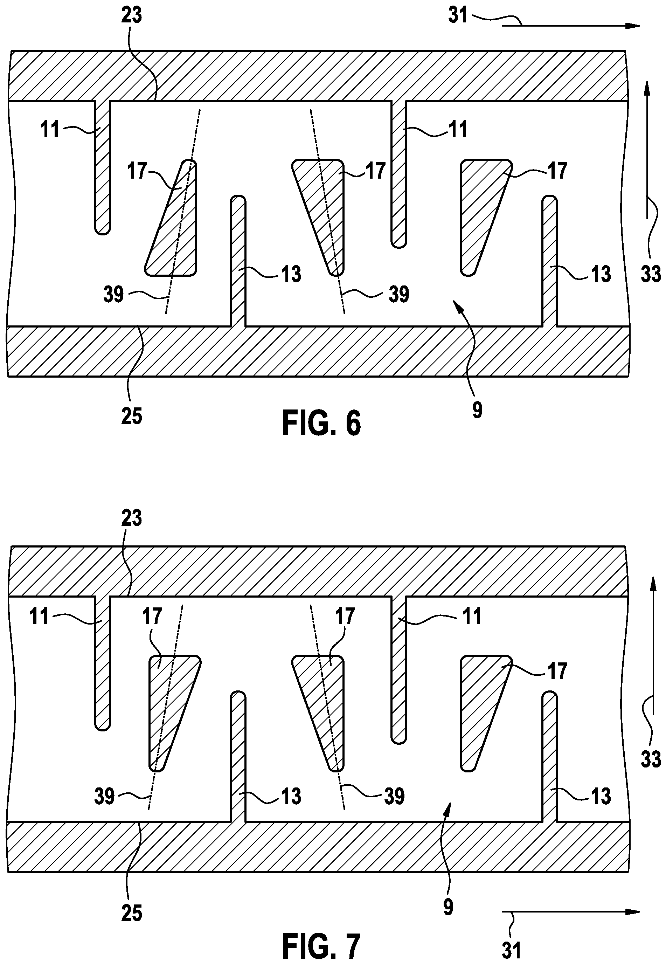

Ferner können Leitstege 17 einen in axialer Richtung 33 veränderlichen Querschnitt aufweisen. Wie in Fig. 6 und 7 gezeigt, ändert sich der Querschnitt der Leitstege 17 in axialer Richtung. Dabei kann der Querschnitt bei unterschiedlichen Leitstegen 17 unterschiedlich variieren. Im Ausführungsbeispiel in Fig. 7 verjüngt sich der Leitsteg 17 zum zweiten Rand 25 des Kühlkanals hin. Die Form der Leitstege 17 entspricht dabei beispielsweise einem Dreieck. In Fig. 7 sind benachbarte Leitstege 17 spiegelsymmetrisch bezüglich der dazwischen liegenden Mäanderstege 11, 13 ausgeführt. Im Ausführungsbeispiel in Fig. 6 verjüngen sich die Leitstege 17 jeweils abwechselnd zum ersten Rand 23 und zum zweiten Rand 25 des Kühlkanals 9 hin.

Wie in Fig. 8 gezeigt, können mehrere, insbesondere zwei Leitstege 17 zwischen jeweils zwei benachbarten Mäanderstegen 11 und 13 angeordnet sein. Dabei befindet sich neben dem Leitsteg 17 ein weiterer Leitsteg 21. Die Leitstege 17, 21 können dabei versetzt bezüglich einer axialen Richtung 33 angeordnet sein. Das heißt, beispielsweise der Leitsteg 17 ist näher zum ersten Rand 23 des Kühlkanals 9 angeordnet, während der weitere Leitsteg 21 näher am zweiten Rand 25 des Kühlkanals 9 angeordnet ist.

In Fig. 3 ist eine plastische Darstellung des Kühlkanals 9 des Gehäuses 1 dargestellt. Dabei ist lediglich das Fluidvolumen, welches durch das Kühlfluid ausgefüllt werden kann, dargestellt. Der Kühlkanal kann eine Kühlfluidzuführung 35 und eine Kühlfluidabführung 37 aufweisen. Diese können als Leitungen im Gehäuse 1 vorgesehen sein.

In Fig. 4 ist der Strömungsverlauf eines zum Beispiel in Fig. 2 und Fig. 3 gezeigten Kühlkanals 9 mit Pfeilen verdeutlicht. Dabei ist ersichtlich, dass das Kühlfluid an vier Seiten am Leitsteg 17 vorbeifließen kann. Der Leitsteg 17 teilt den Strom des Kühlfluids zwischen zwei Mäanderstegen 11, 13 in zwei separate Ströme auf, die anschließend wieder zusammengeführt werden können. Im dargestellten Ausführungsbeispiel kann das Kühlfluid rechts und links am Leitsteg 17 vorbeifließen.

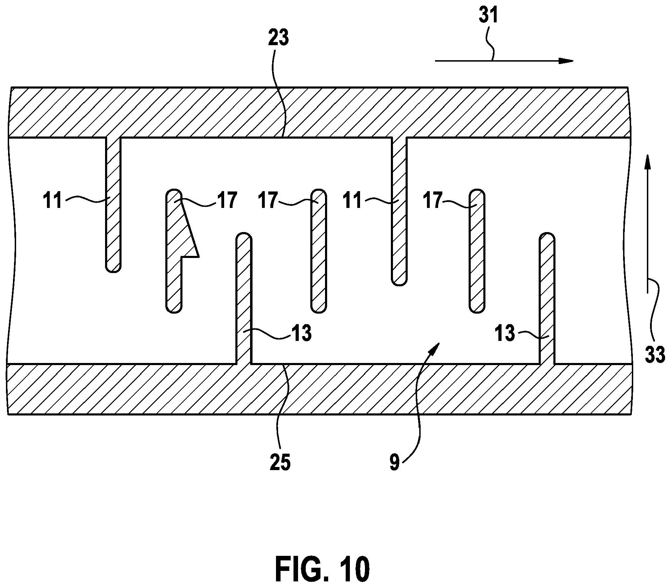

In Fig. 10 ist ein Kühlkanal 9 dargestellt, bei dem beispielhaft ein Leitsteg 17 mit einer asymmetrischen Form gezeigt ist. Dabei weist der Leitsteg 17 im oberen Bereich einen dreieckigen Grundriss auf und ist im unteren Bereich linienförmig ausgeführt. Die übrigen Leitstege 17 können eine andere bzw. unterschiedliche Form aufweisen.

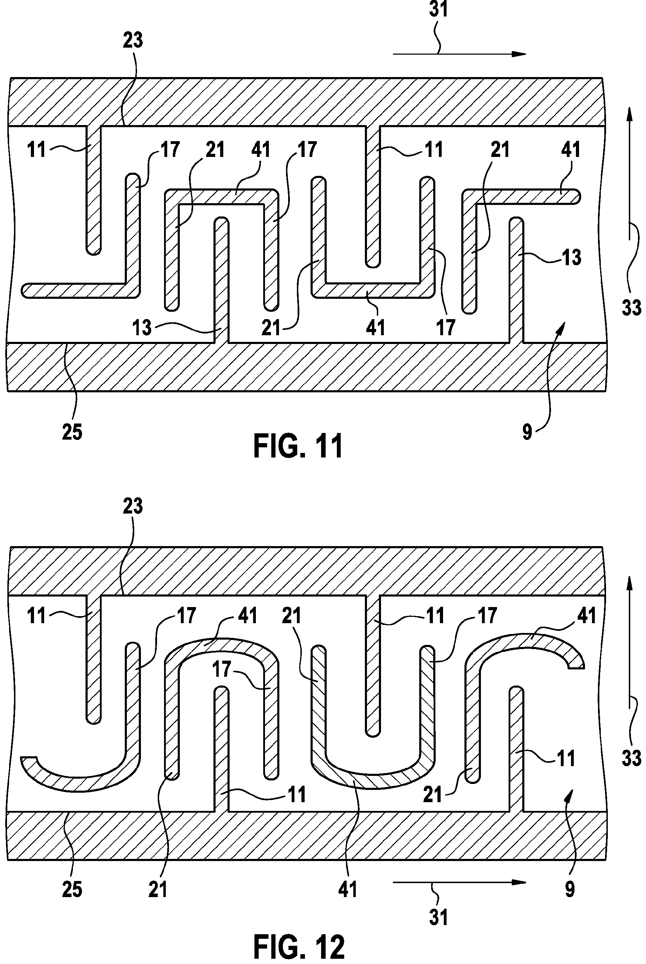

In Fig. 11 ist ein Kühlkanal 9 mit Umlenkstegen 41 dargestellt. Die Umlenkstege 41 verbinden dabei im Ausführungsbeispiel jeweils zwei benachbarte Leitstege 17 miteinander, so dass der durch die einzelnen Leitstege 17 getrennte Kühlfluidpfad auf diese Weise verlängert wird. Die Umlenkstege 41 sind in Fig. 11 geradlinig ausgeführt. Alternativ können die Umlenkstege 41, wie in Fig. 12 gezeigt, bogenförmig bzw. mit einer Krümmung in Umfangsrichtung 31 ausgeführt sein.

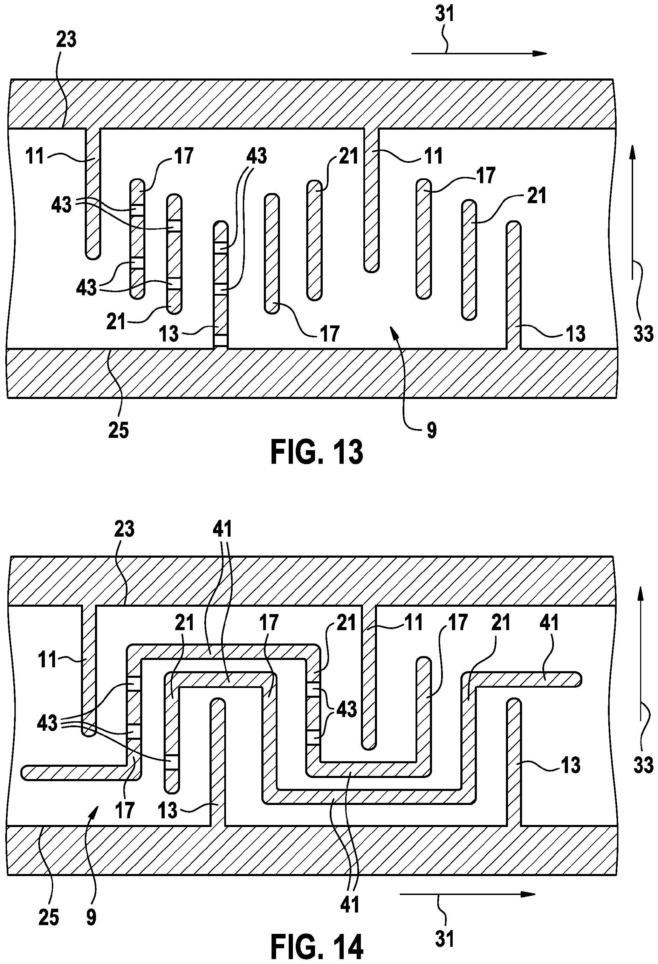

In Fig. 12 ist ein Kühlkanal 9 mit Unterbrechungen 43 an Leitstegen 17, 21 und an Mäanderstegen 13 dargestellt. Dabei können die Unterbrechungen 43 an allen Leitstegen 17, 21 und an allen Mäanderstegen 11, 13 oder lediglich an ausgewählten Stegen 11, 13, 17, 21 vorgesehen sein. Die Unterbrechungen 43 erhöhen dabei die Kühloberfläche und ermöglichen einen Druckausgleich innerhalb des Kühlkanals 9. In Fig. 14 ist einen Kühlkanal 9 dargestellt, bei dem sowohl Umlenkstege 41 als auch Unterbrechungen 43 in den Leitstegen 17, 21 vorgesehen sind, kombiniert. Dabei sind in den Ausführungsbeispielen in Fig. 11 bis 14 jeweils zwei Leitstege 17, 21 zwischen zwei benachbarten Mäanderstegen 11, 13 angeordnet.

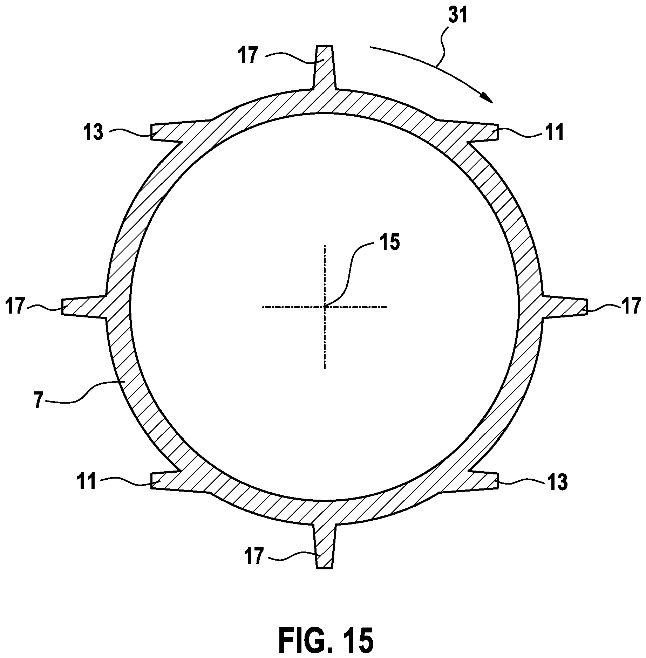

Der Kühlkanal 9 kann dabei wie in Bezug auf Fig. 9 bereits beschrieben einstückig ausgeführt sein. D.h. die Leitstege 17 und die Mäanderstege 11, 13 sind jeweils stoffschlüssig sowohl mit der inneren Mantelfläche 7 als auch mit der äußeren Mantelfläche 5 verbunden. Alternativ kann der Kühlkanal 9 mehrteilig ausgeführt sein. In Fig. 15 ist die Ausgestaltung der inneren Mantelfläche 7 bei radial zweiteiliger Ausgestaltung des Kühlkanals 9 gezeigt. Dabei sind die Leitstege 17 und die Mäanderstege 11, 13 stoffschlüssig mit der inneren Mantelfläche 7 verbunden. Die in Fig. 15 nicht gezeigte äußere Mantelfläche 5 wird separat gefertigt. Dabei kann bei zusammengesetztem Kühlkanal 9 ein Spalt zwischen den Leitstegen 17 und der äußeren Mantelfläche 5 verbleiben. Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

## Patentansprüche

1. Gehäuse (1) einer fluidgekühlten Elektromaschine (3), das Gehäuse (1) aufweisend eine äußere und eine innere Mantelfläche (5, 7), die einen geschlossenen Kühlkanal (9) bilden, und mindestens einen ersten und einen zweiten Mäandersteg (11, 13), die derart am Kühlkanal (9) angeordnet sind, dass ein Kühlfluid mäanderförmig im Kühlkanal (9) geführt wird, **dadurch gekennzeichnet, dass**
zwischen dem ersten und dem zweiten Mäandersteg (11, 13) zumindest ein Leitsteg (17) vorgesehen ist, dessen Längsachse parallel zur Längsachse (15) des Gehäuses (1) verläuft, und dass der zumindest eine Leitsteg (17) ausgeführt ist, das Kühlfluid in parallele Strömungen aufzuteilen, die parallel zur Längsachse (15) des Gehäuses (1) zwischen dem ersten und dem zweiten Mäandersteg (11, 13) geführt sind und in die gleiche Richtung strömen.

2. Gehäuse (1) gemäß Anspruch 1,
wobei der Leitsteg (17) stoffschlüssig mit der äußeren Mantelfläche (5) und mit der inneren Mantelfläche (7) verbunden ist.

3. Gehäuse (1) gemäß einem der Ansprüche 1 bis 2,
wobei eine Längsachse des ersten Mäanderstegs (11) und eine Längsachse des zweiten Mäanderstegs (13) parallel zur Längsachse (15) des Gehäuses (1) verlaufen.

4. Gehäuse (1) gemäß Anspruch 1,
wobei jeweils ein einziger Leitsteg (17) vorgesehen ist, der mittig zwischen dem ersten und dem zweiten Mäandersteg (11, 13) angeordnet ist.

5. Gehäuse (1) gemäß einem der Ansprüche 1 bis 4,
wobei ein zur Längsachse (39) des Leitstegs (17) senkrechter Querschnitt des Leitstegs (17) entlang der Längsache des Gehäuses (1) variiert.

6. Gehäuse (1) gemäß einem der Ansprüche 1 bis 5,
wobei zwischen dem ersten und dem zweiten Mäandersteg (11, 13) ein weiterer Leitsteg (21) vorgesehen ist und wobei die Leitstege (17, 21) parallel zueinander angeordnet sind.

7. Fluidgekühlte Elektromaschine (3), die Elektromaschine (3) aufweisend einen Stator (27) und einen Rotor (29) und ein Gehäuse (1) gemäß einem der Ansprüche 1 bis 6, wobei der Stator (27) und der Rotor (29) in dem Gehäuse (1) angeordnet sind und wobei das Gehäuse (1) ausgeführt ist, den Stator (27) und/oder den Rotor (29) mittels eines Kühlfluids zu kühlen.

## Claims

1. Housing (1) of a fluid-cooled electric machine (3), the housing (1) having an outer and an inner shell surface (5, 7), which form a closed cooling channel (9), and having at least one first and one second meander web (11, 13), which are arranged at the cooling channel (9) such that a cooling fluid is conducted in a meandering manner in the cooling channel (9),
**characterized in that**,
between the first and second meander webs (11, 13), provision is made of at least one guide web (17), the longitudinal axis of which extends parallel to the longitudinal axis (15) of the housing (1), and **in that** the at least one guide web (17) is designed to split the cooling fluid into parallel flows which are conducted parallel to the longitudinal axis (15) of the housing (1) between the first and second meander webs (11, 13) and which flow in the same direction.

2. Housing (1) according to Claim 1,
wherein the guide web (17) is connected in a materially bonded manner to the outer shell surface (5) and to the inner shell surface (7).

3. Housing (1) according to either of Claims 1 and 2,
wherein a longitudinal axis of the first meander web (11) and a longitudinal axis of the second meander web (13) extend parallel to the longitudinal axis (15) of the housing (1).

4. Housing (1) according to Claim 1,
wherein provision is made of in each case one single guide web (17) which is arranged centrally between the first and second meander webs (11, 13).

5. Housing (1) according to one of Claims 1 to 4,
wherein a cross section of the guide web (17) that is perpendicular to the longitudinal axis (39) of the guide web (17) varies along the longitudinal axis of the housing (1).

6. Housing (1) according to one of Claims 1 to 5,
wherein, between the first and second meander webs (11, 13), provision is made of a further guide web (21), and wherein the guide webs (17, 21) are arranged parallel to one another.

7. Fluid-cooled electric machine (3), the electric machine (3) having a stator (27) and a rotor (29) and a housing (1) according to one of Claims 1 to 6, wherein the stator (27) and the rotor (29) are arranged in the housing (1), and wherein the housing (1) is designed to cool the stator (27) and/or the rotor (29) by means of a cooling fluid.

## Revendications

1. Boîtier (1) d'une machine électrique (3) à refroidissement par fluide, le boîtier (1) comportant une surface d'enveloppe (5, 7) extérieure et intérieure formant un canal de refroidissement (9) fermé et au moins une première et une deuxième passerelle à méandres (11, 13) disposées de telle sorte au niveau du canal de refroidissement (9) qu'un fluide de refroidissement est guidé suivant des méandres dans le canal de refroidissement (9) ;
**caractérisé en ce que** :
au moins une passerelle conductrice (17) est prévue entre la première et la deuxième passerelle à méandres (11, 13), l'axe longitudinal de ladite passerelle conductrice s'étendant parallèlement à l'axe longitudinal (15) du boîtier (1) et l'au moins une passerelle conductrice (17) est réalisée de façon à répartir le fluide de refroidissement dans des flux parallèles guidés parallèlement à l'axe longitudinal (15) du boîtier (1) entre la première et la deuxième passerelle à méandres (11, 13) et s'écoulant dans la même direction.

2. Boîtier (1) selon la revendication 1, dans lequel la passerelle conductrice (17) est reliée par complémentarité de matières avec la surface d'enveloppe (5) extérieure et avec la surface d'enveloppe (7) intérieure.

3. Boîtier (1) selon l'une quelconque des revendications 1 et 2, dans lequel un axe longitudinal de la première passerelle à méandres (11) et un axe longitudinal de la deuxième passerelle à méandres (13) s'étendent parallèlement à l'axe longitudinal (15) du boîtier (1).

4. Boîtier (1) selon la revendication 1, dans lequel une passerelle conductrice (17) unique est respectivement prévue, cette passerelle étant disposée de façon centrale entre la première et la deuxième passerelle à méandres (11, 13).

5. Boîtier (1) selon l'une quelconque des revendications 1 à 4, dans lequel une section transversale de la passerelle conductrice (17), perpendiculaire à l'axe longitudinal (39) de la passerelle conductrice (17) varie le long de l'axe longitudinal du boîtier (1).

6. Boîtier (1) selon l'une quelconque des revendications 1 à 5, dans lequel une passerelle conductrice (21) supplémentaire est prévue entre la première et la deuxième passerelle à méandres (11, 13) et dans lequel les passerelles conductrices (17, 21) sont disposées parallèlement l'une par rapport à l'autre.

7. Machine électrique (3) à refroidissement par fluide, la machine électrique (3) comportant un stator (27) et un rotor (29) et un boîtier (1) selon l'une quelconque des revendications 1 à 6, le stator (27) et le rotor (29) étant disposés dans le boîtier (1) et le boîtier (1) étant conçu pour refroidir le stator (27) et/ou le rotor (29) à l'aide d'un fluide de refroidissement.
